# FASCICULE DE BREVET EUROPEEN

(11) **EP 1 170 542 B1**
(45) Date de publication et mention de la délivrance du brevet: **28.04.2004**
(21) Numéro de dépôt: 01401785.9
(22) Date de dépôt: 04.07.2001
(51) Int. Cl.: F16L 41/08, F16L 19/028, F15C 5/00

(54) **Raccordement d'un micro-tube à une structure**
Verfahren zum Verbinden eines Mikro-Rohres mit einem Gegenstand
Method of connecting a micro-tube to a structure

(30) Priorité: 05.07.2000 FR 0008736
(43) Date de publication de la demande: 09.01.2002
(73) Titulaire: COMMISSARIAT A L'ENERGIE ATOMIQUE, 75752 Paris Cédex 15 (FR)
(72) Inventeur: Charles, Raymond, 38430 Saint-Jean de Moirans (FR); Fouillet, Yves, 38340 Voreppe (FR)
(74) Mandataire: Ilgart, Jean-Christophe

(56) Documents cités:
- DE-C- 616 276
- US-A- 1 894 700
- US-A- 2 463 196
- US-A- 5 806 166

## Description

Le sujet de cette invention est un raccordement d'un micro-tube à une structure.

Les tubes dont il est question ici peuvent être souples, rigides ou semi-rigides, ont un très petit diamètre, de l'ordre du millimètre, et sont susceptibles de transporter du fluide gazeux ou liquide à une pression de plusieurs bars.

L'étanchéité aux extrémités de ces micro-tubes n'est alors pas facile à assurer convenablement, et impose soit des sertissures qui réduisent la section d'ouverture du tube, soit des montages compliqués et coûteux, soit des collages qui ne permettent pas de remplacer facilement les tubes.

Un raccordement simple, fiable et démontable est proposé comme l'invention. Il est caractérisé en ce qu'il comprend un joint élastique et bombé entourant le micro-tube, un collet façonné autour du micro-tube en s'effilant hors du micro-tube et s'étendant jusqu'à une circonférence de bombement du joint, et une bride sur la structure, unie à la structure en formant un logement dans lequel le joint est retenu entre des faces du logement sur lesquelles il s'appuie, le collet s'appuyant sur une desdites faces.

Le collet en appui sur une des faces du logement assure une bonne étanchéité à cet endroit, que parfait le joint qui, comprimé dans le logement en direction axiale du micro-tube, presse le collet contre ladite face du logement tout en offrant une couronne d'étanchéité supplémentaire autour du collet.

D'autres aspects, caractéristiques et avantages de l'invention seront encore décrits au moyen des figures.

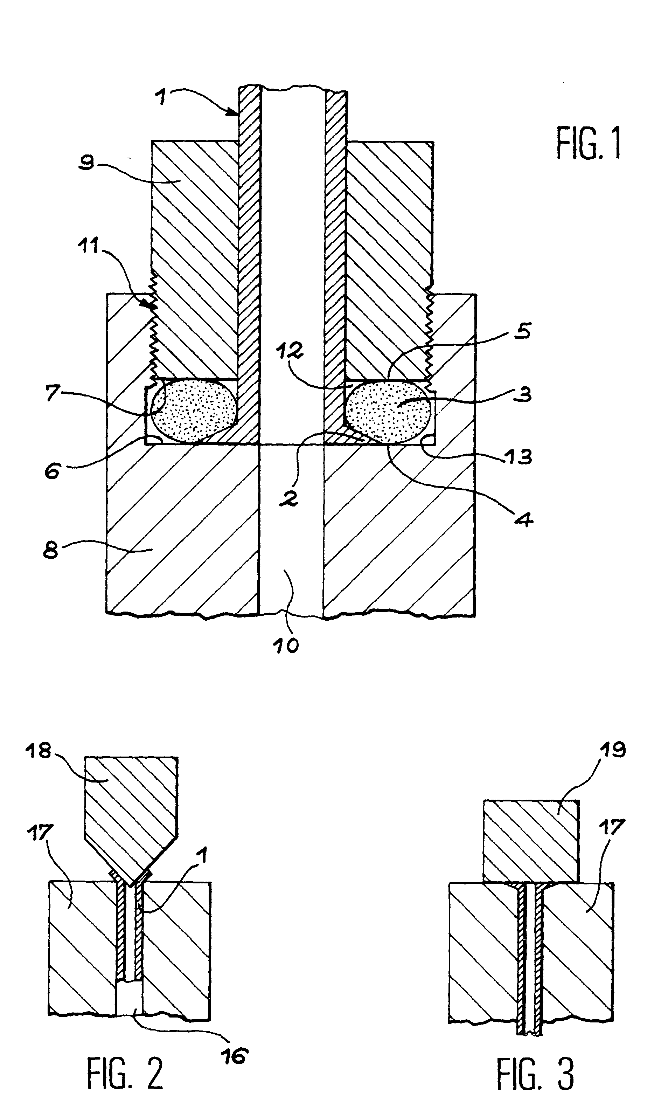

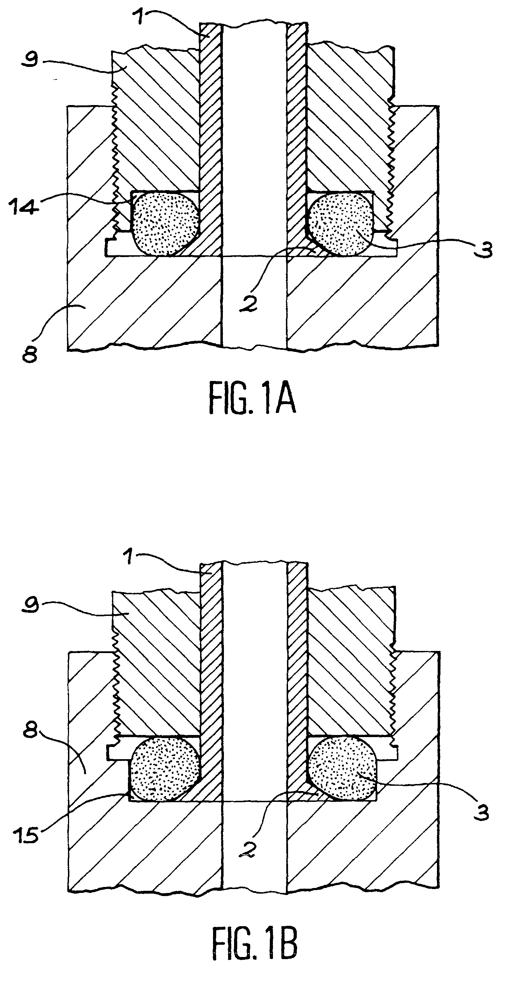

La figure 1 représente une réalisation de l'invention en coupe, les figures 1A et 1B représentent deux variantes de réalisation de la figure 1, et les figures 2 et 3 représentent un mode de réalisation de collet battu.

Un micro-tube 1 est représenté à la figure 1 et finit en un collet battu 2 retenu dans le raccordement qui est le sujet de l'invention. Le collet battu 2 est d'un tenant avec le micro-tube 1. Le raccordement du micro-tube 1 comprend encore un joint 3, qui peut être torique à l'état libre et comprend des bombements opposés 4 et 5 en appui sur deux faces, respectivement 6 et 7, d'une pièce principale de structure 8 et d'une bride 9. La pièce principale de structure 8 porte un canal 10 que le micro-tube 1 prolonge. Le collet battu 2 s'appuie sur la surface 6 de cette pièce principale de structure 8, le joint 3 est posé sur le collet battu 2 et la bride 9 est posée sur le joint 3 pour établir une compression de celui-ci et un serrage du collet battu 2 en le maintenant sur la face 6. La pièce principale de structure 8 peut être unie à la bride 9 par un filetage 11 sur leurs surfaces, qui permet de les unir directement par vissage et de les approcher à volonté en réglant la hauteur d'un logement 12 limité par les faces 6 et 7. La bride 9 et la structure 8 peuvent être pressées ou rapprochées par tout autre moyen de liaison que le serrage direct obtenu à l'aide du filetage 11 cité ici à titre d'exemple.

Le joint 3 est enfilé sur le micro-tube 1 et en appui sur le collet battu 2 ; son petit diamètre est sensiblement égal au diamètre externe du tube 1, et le collet battu 2 s'effile continûment vers l'extérieur (en s'éloignant du micro-tube 1), jusqu'à s'effacer à un diamètre correspondant à celui du bombement 4.

Dans un mode de réalisation préférentielle, le diamètre moyen du joint torique 3 est approximativement égal au diamètre extérieur du collet battu 2, de manière à assurer une pression sur le collet battu 2 et l'étanchéité entre le collet battu et la face 6 de la structure 8.

Comme le joint 3 est pressé par la bride 9, il presse par contrecoup le collet battu 2 contre la surface 6 opposée, s'opposant ainsi au décollement sous la pression du fluide qui s'écoule à travers le micro-tube 1 et le canal 10 de la pièce principale 8 et tend à les disjoindre. L'étanchéité est principalement produite au bombement 4, et l'expérience prouve qu'elle subsiste pour des pressions de fluide atteignant 10 bars. Si la pression du fluide est élevée, il est cependant indiqué de placer le joint 3 dans un logement 14, 15 ménagé soit sur la face 7 de la bride 9, soit sur la face 6 de la structure 8, pour que les alentours du bombement 4 ou 5 correspondant du joint 3 y pénètrent et que la dilatation radiale du joint 3 soit ainsi combattue. Les logements 14 et 15 sont illustrés aux figures 1A et 1B. Contrairement au logement 12, ils prêtent appui à la périphérie du joint 3. Dans les cas ordinaires, la pièce principale de structure 8 sert à des raccordements multiples et porte quantité de canaux 10 qu'on raccorde à autant de micro-tubes 1, et le logement 12 est assez large pour englober le réseau des micro-tubes 1 raccordés. Un cercle de vis est alors couramment utilisé pour unir la bride 9 à la pièce principale 8 de la structure. Dans d'autres conceptions, la bride 9 pourrait porter un filetage extérieur et la pièce principale 8 un filetage intérieur, contrairement à ce qu'on a représenté ici, ou encore d'autres moyens connus pour créer ces deux pièces et les rapprocher.

Un mode de fabrication du collet battu 2 sera décrit en référence aux figures 2 et 3. Le micro-tube 1 est enfilé dans un évidement 16 d'une matrice 17 de manière que son extrémité pointe quelque peu au dehors. Un poinçon conique 18 est enfoncé dans cette extrémité saillante et l'évase. Un poinçon plat 19 (qui peut être une face opposée du même) est alors pressé sur la face supérieure de la matrice 17 en écrasant l'extrémité du micro-tube 1 contre cette surface, ce qui donne le collet battu 2 de la figure 1.

Ce procédé convient pour la plupart des matériaux composant le micro-tube. D'autres peuvent lui être substitués, notamment si le micro-tube 1 est souple : on peut alors le durcir par un chauffage ou par un autre moyen, selon sa composition, une fois que la déformation a été faite. Il est possible aussi d'utiliser le microtube en verre ; le procédé précédent sera accompagné d'un chauffage pour ramollir le verre.

En général, les collets seront commodément réalisés par un procédé de déformation permanente de matière.

Le joint 3 illustré était torique. Des sections autres que circulaires conviendraient tant qu'elles posséderaient des bombements s'appuyant sur les faces opposés 6 et 7 du logement 12 pour presser le collet 2 contre la face 6. De même, on a représenté un collet 2 s'arrêtant juste au diamètre du joint 3 correspondant à la hauteur (entre les bombements 4 et 5) la plus grande, mais il n'est pas nécessaire de respecter exactement cette condition, et le collet 2 pourrait être un peu plus ou un peu moins large. Cependant, cette configuration reste préférée.

## Revendications

1. Raccordement d'un micro-tube (1) à une structure (8), **caractérisé en ce qu'**il comprend un joint élastique (3) et bombé entourant le micro-tube, un collet (2) façonné autour du micro-tube en s'effilant hors du micro-tube et s'étendant jusqu'à une circonférence de bombement (4) du joint, et **en ce qu'**il comprend une bride (9) unie à la structure en formant un logement (12, 14, 15) dans lequel le joint est retenu entre des faces (6, 7) du logement sur lesquelles il s'appuie, le collet s'appuyant sur une desdites faces.

2. Raccordement suivant la revendication 1, **caractérisé en ce que** la bride et la structure sont pressées l'une vers l'autre à l'aide d'un moyen de liaison.

3. Raccordement suivant l'une quelconque des revendications 1 ou 2, **caractérisé en ce que** le collet (2) est réalisé d'une pièce avec le micro-tube (1).

4. Raccordement suivant l'une quelconque des revendications 1 à 3, **caractérisé en ce que** le logement (14, 15) est conçu de façon à prêter appui à une périphérie du joint (3).

5. Raccordement suivant l'une quelconque des revendications 1 à 3, **caractérisé en ce que** le logement (12) englobe plusieurs micro-tubes (1).

## Patentansprüche

1. Verbindung eines Mikro-Rohrs (1) mit einer Struktur (8),
**dadurch gekennzeichnet, dass** sie eine das Mikro-Rohr umgebende gewölbte elastische Dichtung (3) und einen das Mikro-Rohr umgebenden, außerhalb des Mikro-Rohrs bis zu einem Wölbungsumfang (4) der Dichtung spitz zulaufenden Bund (2) umfasst, und dadurch, dass sie einen mit der Struktur derart vereinigten Rohrflansch (9) umfasst, dass ein Sitz (12, 14, 15) ausgespart bleibt, der die Dichtung zwischen Flächen (6, 7) aufnimmt, auf denen sie sich abstützt, wobei der Bund sich auf einer der genannten Flächen abstützt.

2. Verbindung nach Anspruch 1, **dadurch gekennzeichnet, dass** der Rohrflansch und die Struktur durch eine Verbindungseinrichtung gegeneinander gepresst werden.

3. Verbindung nach einem der Ansprüche 1 oder 2, **dadurch gekennzeichnet, dass** der Bund (2) mit dem Mikro-Rohr (1) aus einem Stück ist.

4. Verbindung nach einem der Ansprüche 1 bis 3, **dadurch gekennzeichnet, dass** der Sitz (14, 15) so konzipiert ist, dass er einem Umfang der Dichtung (3) als Stütze dient.

5. Verbindung nach einem der Ansprüche 1 bis 3, **dadurch gekennzeichnet, dass** der Sitz (12) mehrere Mikro-Rohre (1) umfasst.

## Claims

1. Connection of a micro-tube (1) to a structure (8), **characterized in that** it comprises an elastic, cambered joint (3) surrounding the micro-tube, a flange (2) fashioned around the micro-tube tapering out of the micro-tube and extending up to a bulging circumference (4) of the joint, and **in that** it comprises a collar (9) on the structure, joined to such structure whilst forming a recess (12, 14, 15) in which the joint is held between the faces (6, 7) of the recess on which it bears, the flange bearing on one of said faces.

2. Connection according to claim 1, **characterized in that** the collar and the structure are pressed towards one another with the aid of a linking means.

3. Connection according to either of the claims 1 and 2, **characterized in that** the flange (2) is produced in one piece with the micro-tube (1).

4. Connection according to any one of the claims 1 to 3, **characterized in that** the recess (14, 15) is designed so as to support a periphery of the joint (3).

5. Connection according to any one of the claims 1 to 3, **characterized in that** the recess (12) includes several micro-tubes (1).
